Europäisches Patentamt

European Patent Office

Office européen des brevets

(11) Publication number: **0 033 798**
**B1**

# EUROPEAN PATENT SPECIFICATION

(45) Date of publication of patent specification: **25.04.84**

(21) Application number: **80303626.8**

(22) Date of filing: **14.10.80**

(51) Int. Cl.³: **B 29 D 23/00,**
**B 29 D 23/12, B 65 H 81/08**

(54) Method of manufacturing flexible hose.

(30) Priority: **04.02.80 US 118587**

(43) Date of publication of application:
**19.08.81 Bulletin 81/33**

(45) Publication of the grant of the patent:
**25.04.84 Bulletin 84/17**

(84) Designated Contracting States:
**DE FR GB NL**

(56) References cited:
**EP - A - 0 005 278**
**BE - A - 772 301**
**FR - A - 2 312 356**
**US - A - 3 155 559**
**US - A - 3 271 064**
**US - A - 3 477 891**
**US - A - 3 548 724**
**US - A - 3 962 019**

(73) Proprietor: **AUTOMATION INDUSTRIES INC.**
**500 West Putnam Avenue**
**Greenwich Connecticut 06830 (US)**

(72) Inventor: **Kutnyak, A. Thomas**
**101 Coventry Drive**
**Greenwood, South Carolina 29646 (US)**

(74) Representative: **Warden, John Christopher et al,**
**R.G.C. Jenkins & Co. 12-15, Fetter Lane**
**London EC4A 1PL (GB)**

Courier Press, Leamington Spa, England.

Method of manufacturing flexible hose

The invention relates to a method as indicated in the pre-characteristic portion of claim 1. Such a method is known from U.S.—A—3271064.

Indefinite lengths of helically fabricated flexible hose are commonly made on mandrel devices such as that described in the above-mentioned document and also in U.S.—A—3155559 which comprises a frame and a substantially tubular mandrel core axially rotatable with respect to the frame. One or more belts are provided with a portion thereof wrapped helically about the core with the belt convolutions defining a mandrel surface. Drive means are included for rotating the core with respect to the frame and drawing additional convolutions of the belt about one end of the core. Feeding means are included on the frame for urging all of the convolutions toward the opposite end of the core. A belt guide is provided at the opposite end of the core and affixed to the frame for controlling the collapse of each successive belt convolution and directing it inwardly through the core so that it can be wrapped back on the core.

With this apparatus an elongated circumferentially complete mandrel surface is continuously formed, continuously translated in a longitudinal direction, continuously collapsed at the end thereof which is forward in relation to the direction of translation, and continuously replaced at that end thereof which is rearward in relation to the direction of translation. One or more extended fabricating elements, such as plastic strips and a wire helix, are continuously applied adjacent the rearward end of the mandrel surface so that they advance continuously from the forward end of the mandrel surface in the form of an indefinite length of helically fabricated flexible tubing.

Such tubing has a substantially smooth cylindrical interior surface because the mandrel surface on which it is formed has a similar cylindrical surface. The mandrel surface is substantially smooth and cylindrical because the face of the belt which forms that surface is planar, which is to say flat.

It has been proposed in BE—A—772301 to manufacture protective sleeving having an undulative surface upon a belt mandrel fitted with metal segments of shallow curvature or with segments in the form of blocks which are recessed so as to form a single continuous helical groove when the belt is in the wrapped form. The groove may be used to provide an interior filling e.g. of foam material. The purpose of the undulations or filling appears to be to improve the protective qualities of the sleeving and its flexibility is not discussed.

The invention is based upon the recognition that the flexibility of known hose depends mainly on the elasticity of the wall material. A typical construction consists of a metal wire helix with overlapping plies of soft plastic such as polyvinyl chloride wrapped about the helix, and perhaps reinforced with synthetic cords. The corrugated configuration of such tubing is entirely on its exterior, as opposed to its interior, and when it is bent into a sharp radius the distance between the convolutes of the wire helix expands on the outside of the bend and stretches the wall material. The neutral bending axis, i.e. that axis which stays of constant length during bending, is displaced from the geometric centerline toward the inside of the bend.

The inventors recognised that this construction imposed limitations upon the flexibility and longevity of the hose which can be said to constitute a problem which the invention sets out to solve.

This problem is solved in accordance with the invention by producing, with the aid of a novel mandrel, a reinforced hose having a helically corrugated configuration on its inside surface as well as on its outside surface. Such hose of the wire reinforced type is more flexible because the wire convolutes can close more readily on the inside of a bend as they open on the outside of the bend, and the neutral bending axis therefore remains closer to the geometric axis.

In its broad terms the invention provides a method of manufacturing an indefinite length of helically fabricated flexible hose having external corrugations from extruded, hardenable plastics material reinforced by a winding of wire wherein an elongated circumferentially complete mandrel surface is formed, translated in a longitudinal direction and rotated, collapsed at the end thereof which is forward in relation to the direction of translation, and replaced at that end thereof which is rearward in relation to said direction of translation, and the wire and the extruded plastics material are applied successively adjacent the rearward end of the mandrel surface so that they advance from the forward end in the form of said hose as the mandrel rotates, the mandrel surface being defined by one face of at least one closed loop belt having a continuous unbroken surface and optionally internal drive teeth, the belt being arranged helically with the convolutions adjoining, characterised in that the belt face is formed with one or more distinct ridges of a height greater than the thickness of the remainder of the belt (excluding any teeth) the ridge(s) being longitudinally continuous throughout at least a substantial part of its (their) length, and, the reinforcing wire is wound in a gap between the external ridges or in a helically extending groove in an external ridge, thereby producing flexible hose which has external and internal helically extending ridges with the wire reinforcement on the inner side of the tubing or encased between layers of the plastics material.

By optionally providing the non-planar configuration only along a portion of the length of the belt face and leaving the remainder of that length in the usual planar or flat form, sections of the hose will have the ordinary smooth cylindrical interior surface at regular intervals. The hose can be cut at these sections and fitted with cuffs or connectors.

An embodiment of the invention is hereafter described with reference to the accompanying drawings, in which:—

Fig. 1 is a planar view of apparatus for making double-ply wire-reinforced hose;

Fig. 2 is an elevation partly broken away of the configured belt form of the mandrel device;

Fig. 3 is a section taken along the line 3—3 of Fig. 2;

Fig. 4 shows one cross-section of the configured belt of the invention;

Fig. 5 is a fragmentary elevation partly broken away showing a simple form of hose wall developed on the belt of Fig. 4;

Fig. 6 shows another cross-section of the configured belt of the invention;

Fig. 7 shows another cross-section of the belt;

Fig. 8 shows still another cross-section of the belt;

Fig. 9 shows still another cross-section of the belt;

Fig. 10 shows still another cross-section of the belt;

Fig. 11 shows yet another cross-section of the belt;

Fig. 12 shows a form of the belt of the invention wherever a portion of the belt face is not configured;

Fig. 13 is a side view of the belt of Fig. 12 partly broken away;

Fig. 14 is a section taken along the line 14—14 of Fig. 13;

Fig. 15 is a section taken along the line 15—15 of Fig. 13; and

Fig. 16 is a fragmentary elevation partly broken away of a simple form of hose wall developed on the belt of Fig. 13.

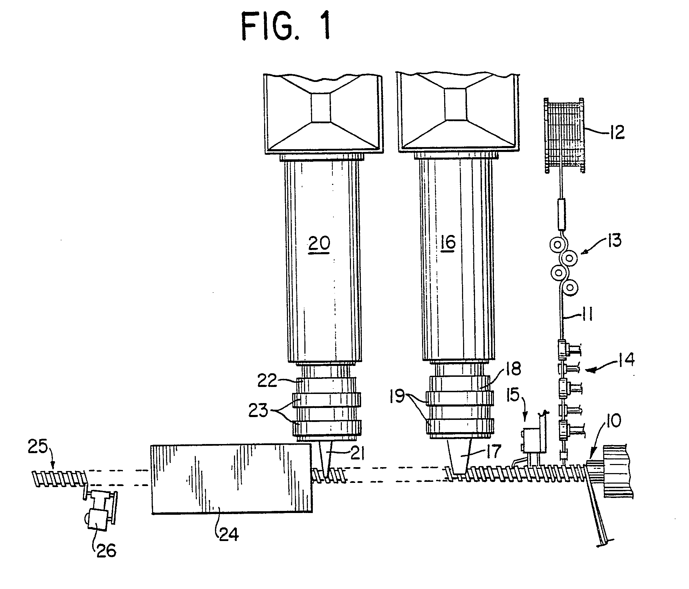

The typical components of a tube making machine for manufacturing wire-reinforced flexible hose are shown in Fig. 1 to include the mandrel device 10 of the invention, described in detail below. A steel wire 11 is taken from a reel 12 and is directed through rollers 13 and 14 so that it is in the form of a wire helix when it is disposed about the mandrel. A suitable wire speed control 15 is provided to correlate the feed rate of the wire to the mandrel speed, all in a manner well known in the art. A first extruder 16 applies a strip of plastic 17 to the wire helix on the mandrel through a die 18 and heater bands 19. A second extruder 20 applies a second strip of plastic 21 through a die 22 and heater bands 23 in overlapping fashion on the first plastic strip 17. The plastic employed in these extruders is typically polyvinyl chloride. The composite double-ply hose is then passed through a cooling bath 24 so that finished wire reinforced plastic tubing 25 emerges from the end of the apparatus to be cut into appropriate lengths by a cutter 26.

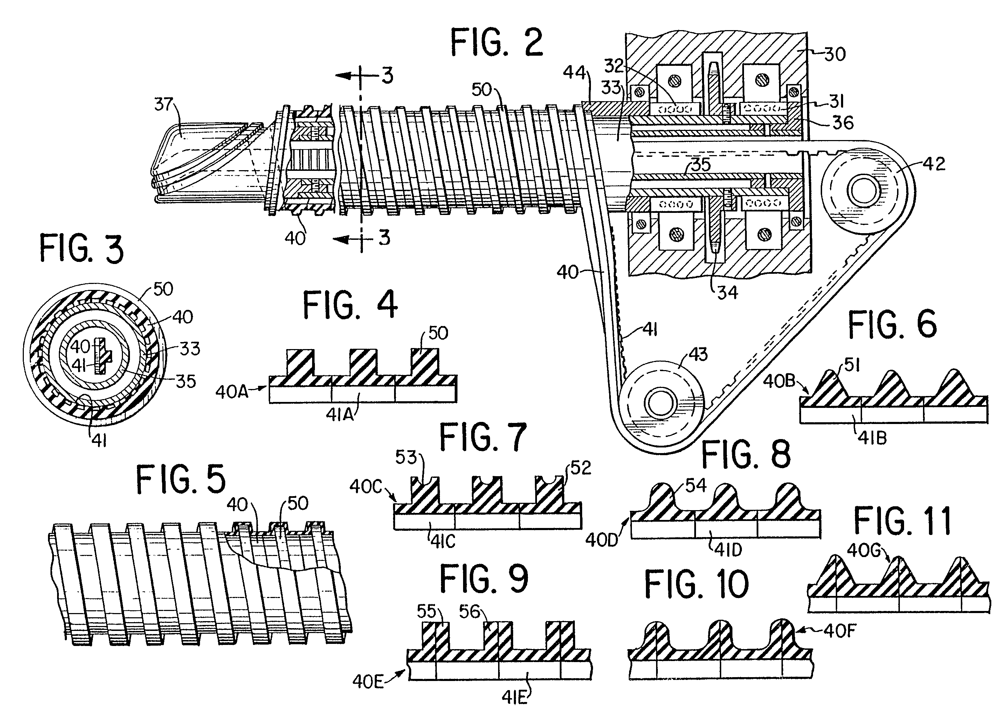

Referring now to Fig. 2 the mandrel apparatus of the invention includes a stationary frame 30 on which are mounted bearings 31 and 32. As described in US—A—3,271,064 an elongated tubular mandrel core 33 is rotatably supported in these bearings and has a drive gear 34 which is driven by suitable drive means. Within the core 33 is a support tube 35 which is fixed at one end to the frame 30 by a mount 36. At the other end of the support tube 35 is a belt guide 37, the function of which is described below.

A plurality of drive teeth are formed about the core 33 adjacent to frame 30, and a long helically disposed key (not shown) extends from one of the teeth to the opposite end of the core in the manner described in the aforementioned patent.

The apparatus includes a closed loop belt 40 which has teeth 41 on its underside. The belt is passed around guide pulleys 42 and 43 and then about the core 33 at a feed cam 44 on the frame 30. The teeth on the belt are engaged by the drive teeth on the core so that the belt is drawn onto the core in successive convolutions which are urged by the feed cam toward the outer end of the mandrel. The helical key maintains the convolutions in proper configurations and the guide 37 causes each successive convolution to be collapsed at the outer end of the mandrel and returned through the tubular support 35.

The elements of the hose, whether they be plastic strip or wire or whatever, are applied about this mandrel surface as shown in Fig. 1. All of the structure and mode of operation described to this point are well known in the prior art and particularly in the aforementioned US—A—3,271,064.

The invention provides for a specially configured belt face opposite the underside of the belt where the teeth 41 are formed. This special configuration of the belt face produces a corresponding configuration on the interior of the tubing formed on the mandrel, and in particular a configuration which is other than cylindrical.

Fig. 4 shows one cross-section of the configured belt 40A which has teeth 41A. On the face of the belt 40A opposite the teeth is a ridge 50 of rectangular cross-section which will provide a corresponding inwardly extending rectangular corrugation on the inside of the tube, an example of which is shown in Fig. 5.

Similarly Fig. 6 illustrates a form of the belt 40B with teeth 41B and with a triangular ridge 51 along its centerline. This forms a triangular inwardly extending corrugation on the inside of the hose.

Fig. 7 illustrates a belt 40C with teeth 41C and a rectangular ridge 52 with a groove 53 along its outer edge. This groove provides a seat to locate a wire helix at the top of the con- volute, as provided in the Fig. 1 apparatus.

The wire helix may be placed on the inner side of the hose or encased between multiple plies of plastic.

Fig. 8 shows a form of belt 40D with teeth 41D and a rounded ridge 54 along its centerline. This imparts rounded inwardly extending corrugations to the hose which makes it less susceptible to cracking at corners.

Fig. 9 illustrates a belt 40E with teeth 41E and a pair of ridges 55 and 56. These ridges are matched halves which abut side by side on the mandrel surface to form a unitary corrugation of rectangular shape. A wire helix may be placed between the ridges at the bottom of the inverted corrugation.

Fig. 10 shows a similar form of belt 40F with matched ridges defining a rounded corrugation and Fig. 11 shows a form of belt 40G where the matched halves form a triangular unitary corrugation.

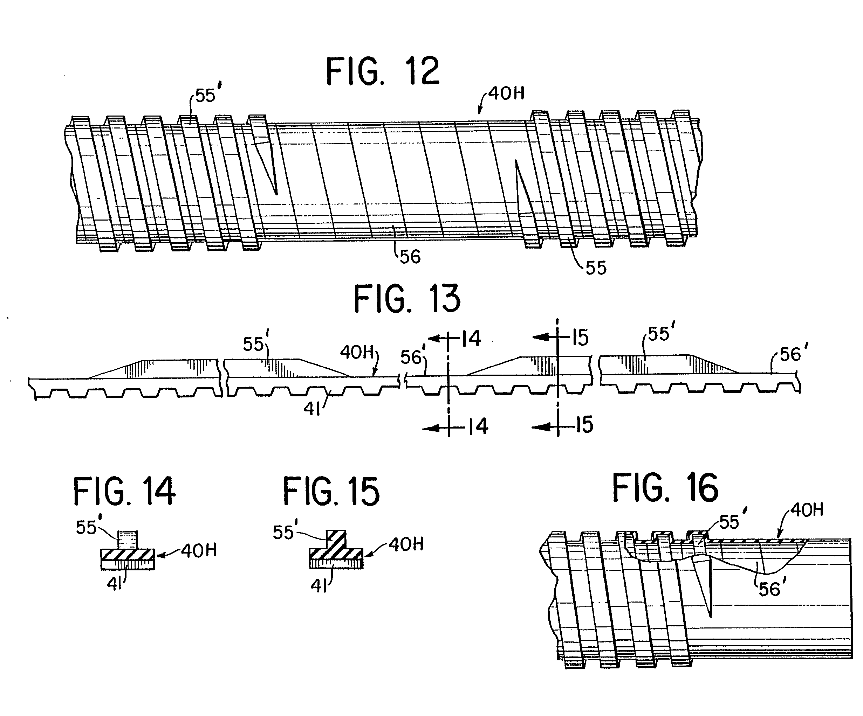

Referring now to Figs. 12 through 15, a form of belt 40H is shown wherein a rectangular ridge 55' is interrupted by sections 56' which are planar and flat as in the belts previously used in the prior art. The flat sections 56' produce hose with a smooth cylindrical surface whereas the sections with the ridge 55' produce hose with the interior corrugation of the invention. The smooth intermediate sections produced by the flat belt 56' are particularly adapted for attachment of a cuff or connector when the predetermined lengths are severed by the cutter 26 as shown in Fig. 16. It is to be understood that all of the belt configurations shown in Figs. 4 through 11 are applicable to the design of belt described in connection with Figs. 12 to 15.

## Claims

1. A method of manufacturing an indefinite length of helically fabricated flexible hose (25) having external corrugations from extruded, hardenable plastics material (17, 21) reinforced by a winding of wire (11) wherein an elongated circumferentially complete mandrel surface (10) is formed, translated in a longitudinal direction and rotated, collapsed at the end thereof (37) which is forward in relation to the direction of translation, and replaced at that end thereof (44) which is rearward in relation to said direction of translation, and the wire and the extruded plastics material are applied successively adjacent the rearward end of the mandrel surface so that they advance from the forward end in the form of said hose as the mandrel rotates, the mandrel surface being defined by one face of at least one closed loop belt (40) having a continuous unbroken surface and optionally internal drive teeth (41), the belt being arranged helically with the convolutions adjoining, characterised in that the belt face is formed with one or more distinct ridges (50, 51, 52, 54, 55, 56) of a height greater than the thickness of the remainder of the belt (excluding any teeth), the ridge(s) being longitudinally continuous throughout at least a substantial part of its (their) length, and, the reinforcing wire (11) is wound in a gap between the external ridges or in a helically extending groove (53) in an external ridge, thereby producing flexible hose which has external and internal helically extending ridges with the wire reinforcement on the inner side of the tubing or encased between layers of the plastics material.

2. A method according to claim 1 wherein said non-planar configuration extends throughout the entire length of the belt face.

3. A method according to claim 1 wherein said non-planar configuration extends throughout most of the length of the belt face and the remainder of the length of the belt face (40H, Fig. 12) is planar.

4. A method according to claim 1 wherein a single ridge (50, 51, 52, 54) extends along the center portion of the belt face.

5. A method according to claim 4 wherein the single ridge (50) has a rectangular cross-section.

6. A method according to claim 4 wherein the single ridge (51) has a triangular cross-section.

7. A method according to claim 4 wherein the single ridge (54) has a rounded cross-section.

8. A method according to claim 4 wherein the single ridge (52) has a groove (53) along its outer edge for receiving the wire (11).

9. A method according to any of claims 1 to 3 wherein two ridges extend along the respective opposite edge portions of the belt face.

10. A method according to claim 9 wherein the ridges are matched halves (55, 56) which abut side-by-side on the mandrel surface to form a unitary corrugation.

11. A method according to claim 10 wherein the unitary corrugation has a rectangular cross-section.

12. A method according to claim 10 wherein the unitary corrugation has a triangular cross-section.

13. A method according to claim 10 wherein the unitary corrugation has a rounded cross-section.

## Revendications

1. Procédé de fabrication d'un tronçon de longueur indéfinie d'une tuyauterie souple (25) fabriquée en hélice, ayant des ondulations externes formées d'une matière plastique durcissable extrudée (17, 21) armée par un enroulement d'un fil métallique (11), dans lequel une surface allongée de mandrin (10) complète circonférentiellement est formée, déplacée en translation dans une direction longitudinale et entraînée en rotation, supprimée à son extrémité (37) qui se trouve en avant dans le sens de déplacement en translation, et remise en place à son extrémité (44) qui se trouve en arrière dans le sens de déplacement en translation, et le fil métallique et la matière plastique extrudée sont appliqués successivement près de l'extrémité arrière de la surface du mandrin si bien qu'ils avancent à partir de l'extrémité avant sous la forme de ladite tuyauterie souple lorsque le mandrin tourne, la surface du mandrin étant délimitée par une première face d'au moins une courroie (40) en boucle fermée ayant une surface continue sans discontinuité et, éventuellement des dents internes (41) d'entraînement, la courroie étant disposée en hélice avec des spires adjacentes, caractérisé en ce que la face de la courroie est formée avec une ou plusieurs nervures distinctes (50, 51, 52, 54, 55, 56) dont la hauteur est supérieure à l'épaisseur du reste de la courroie (à l'exclusion des dents éventuelles), la nervure ou les nervures étant continues longitudinalement sur une partie importante au moins de leur longueur, et le fil métallique d'armature (11) est enroulé dans un espace délimité entre les nervures externes ou dans une gorge (53) disposée en hélice dans une nervure externe, si bien que la tuyauterie souple formée a des nervures hélicoïdales externes et internes, l'armature de fil métallique se trouvant à la face interne du tube ou étant enrobée entre des couches de la matière plastique.

2. Procédé selon la revendication 1, dans lequel la configuration non plane s'étend sur toute la longueur de la face de la courroie.

3. Procédé selon la revendication 1, dans lequel la configuration non plane s'étend sur la plus grande partie de la longueur de la face de la courroie, et le reste de la longueur de la face de la courroie (40H, figure 12) est plan.

4. Procédé selon la revendication 1, dans lequel une nervure unique (50, 51, 52, 54) s'étend le long de la partie centrale de la face de la courroie.

5. Procédé selon la revendication 4, dans lequel la nervure unique (50) a une section rectangulaire.

6. Procédé selon la revendication 4, caractérisé en ce que la nervure unique (51) a une section triangulaire.

7. Procédé selon la revendication 4, caractérisé dans lequel la nervure unique (54) a une section arrondie.

8. Procédé selon la revendication 4, dans lequel la nervure unique (52) a une gorge (53) le long de son bord externe afin qu'elle loge le fil métallique (11).

9. Procédé selon l'une quelconque des revendications 1 à 3, dans lequel deux nervures sont disposées le long de parties respectives des bords opposés de la face de la courroie.

10. Procédé selon la revendication 9, dans lequel les nervures sont des moitiés complémentaires (55, 56) qui sont en butée face à face à la surface du mandrin afin qu'elles forment une ondulation en une seule pièce.

11. Procédé selon la revendication 10, dans lequel l'ondulation en une seule pièce a une section rectangulaire.

12. Procédé selon la revendication 10, dans lequel l'ondulation en une seule pièce a une section triangulaire.

13. Procédé selon la revendication 10, dans lequel l'ondulation en une seule pièce a une section arrondie.

**Patentansprüche**

1. Verfahren zur Herstellung eines unbegrenzten Längenstücks eines wendelförmig gefertigten flexiblen Schlauchs (25), der äußere Rippen aufweist, aus extrudiertem härtbaren Kunststoff (17, 21), der durch eine Drahtwicklung (11) verstärkt ist, wobei eine langgestreckte am Umfang vollständige Dornoberfläche (10) gebildet, in Längsrichtung translatorisch bewegt und gedreht, an ihrem Ende (37), das bezogen auf die Richtung der translatorischen Bewegung vorne liegt, kollabieren gelassen und an ihrem Ende (44), das sich bezogen auf die Richtung der translatorischen Bewegung hinten befindet, ersetzt wird, der Draht und der extrudierte Kunststoff aufeinanderfolgend angrenzend an das hintere Ende der Dornoberfläche so aufgebracht werden, daß sie sich vom vorderen Ende in der Form des Schlauchs bei der Drehung des Dorns vorwärtsbewegen, die Dornoberfläche von einer Seite wenigstens eines Riemens (40) mit geschlossener Schlaufe gebildet wird, der eine fortlaufende ununterbrochene gleichbleibende Oberfläche und wahlweise innere Treibzähne (41) aufweist, und wobei der Riemen wendelförmig mit aneinanderliegenden Windungen angeordnet ist, dadurch gekennzeichnet, daß die Riemenfläche mit einem oder mehreren getrennten Erhebungen (50, 51, 52, 54, 55, 56) versehen ist, die eine Höhe haben, die größer ist als die Stärke des restlichen Riemens (ausgeschlossen alle Zähne), wobei die Erhebung/die Erhebungen in Längsrichtung auf wenigstens einem wesentlichen Teil ihres/ihrer Länge fortlaufend ist/sind, und daß der Verstärkungsdraht (11) in einen Spalt zwischen die äußeren Erhebungen oder in eine wendelförmig verlaufende Nut (53) in einer äußeren Erhebung gewickelt ist, wodurch ein flexibler Schlauch erzeugt wird, der äußere und innere, sich wendelförmig erstreckende Erhebungen aufweist, wobei sich die Drahtverstärkung auf der Innenseite des Schlauchs befindet oder zwischen den Schichten des Kunststoffs eingeschlossen ist.

2. Verfahren nach Anspruch 1, bei welchem sich die nicht ebenflächige Gestaltung über die gesamte Länge der Riemenfläche erstreckt.

3. Verfahren nach Anspruch 1, bei welchem sich die nicht ebenflächige Gestaltung über den größten Teil der Länge der Riemenfläche erstreckt und der Rest des Längenstücks der Riemenfläche (40H, Fig. 12) ebenflächig ist.

4. Verfahren nach Anspruch 1, bei welchem sich eine einzige Erhebung (50, 51, 52, 54) längs des Mittelabschnitts der Riemenfläche erstreckt.

5. Verfahren nach Anspruch 4, bei welchem die einzige Erhebung (50) einen rechteckigen Querschnitt hat.

6. Verfahren nach Anspruch 4, bei welchem die einzige Erhebung (51) einen dreieckigen Querschnitt hat.

7. Verfahren nach Anspruch 4, bei welchem die einzige Erhebung (54) einen abgerundeten Querschnitt hat.

8. Verfahren nach Anspruch 4, bei welchem die einzige Erhebung (52) längs ihres äußeren Randes für die Aufnahme des Drahts (11) eine Nut (53) aufweist.

9. Verfahren nach einem der Ansprüche 1 bis 3, bei welchem sich zwei Erhebungen längs der jeweiligen gegenüberliegenden Randabschnitte der Riemenfläche erstrecken.

10. Verfahren nach Anspruch 9, dadurch gekennzeichnet, daß die Erhebungen angepaßte Hälften (55, 56) sind, die Seite an Seite auf der Dornoberfläche zur Bildung einer einheitlichen Rippe aneinanderliegen.

11. Verfahren nach Anspruch 10, bei welchem die einheitliche Rippe einen rechteckigen Querschnitt hat.

12. Verfahren nach Anspruch 10, bei welchem die einheitliche Rippe einen dreieckigen Querschnitt hat.

13. Verfahren nach Anspruch 10, bei welchem die einheitliche Rippe einen abgerundeten Querschnitt hat.

**0 033 798**

# FIG. 1

FIG. 2

FIG. 3

FIG. 4

FIG. 5

FIG. 6

FIG. 7

FIG. 8

FIG. 9

FIG. 10

FIG. 11

0 033 798

# FIG. 12

# FIG. 13

# FIG. 14

# FIG. 15

# FIG. 16

0 033 798